# EUROPÄISCHE PATENTANMELDUNG

(11) **EP 3 437 586 A1**
(43) Veröffentlichungstag der Anmeldung: **06.02.2019**
(21) Anmeldenummer: 17184285.9
(22) Anmeldetag: 01.08.2017
(51) Int. Cl.: A61C 8/00, A61C 9/00

(54) **ABUTMENT ZUM HALTEN EINES ZAHNERSATZES AN EINEM KIEFERIMPLANTAT UND VERFAHREN ZUM HERSTELLEN EINES ZAHNERSATZES**

(71) Anmelder: Medentika GmbH, 76549 Hügelsheim (DE)
(72) Erfinder: Fix, Frank, 75196 Remchingen (DE)
(74) Vertreter: Durm Patentanwälte PartG mbB

(57) **Zusammenfassung**

Die vorliegende Erfindung betrifft ein Abutment (10) zum Halten eines Zahnersatzes an einem Kieferimplantat, mit: einem apikalen Abschnitt (12) zum lösbaren Befestigen des Abutments (10) an dem Kieferimplantat, der entlang einer ersten Zentralachse (18) aufgebaut ist; einem koronalen Abschnitt (14) zum lösbaren Befestigen des Zahnersatzes an dem Abutment (10), der entlang einer zweiten Zentralachse (22) aufgebaut ist, wobei die zweite Zentralachse (22) abgewinkelt zur ersten Zentralachse (18) verläuft; und einem Indexierungselement (24, 24a, 24b) in einer Mantelfläche (26) des koronalen Abschnitts (14) zum Vorgeben einer Ausrichtung eines an den koronalen Abschnitt (14) für einen digitalen Scanvorgang ankoppelbaren Anzeigeelements (30) basierend auf einer Ausrichtung der ersten Zentralachse (18). Die Erfindung betrifft weiterhin ein Anzeigeelement (30) zum Ankoppeln an einen koronalen Abschnitt (14) eines Abutments (10) nach einem der vorstehenden Ansprüche und Anzeigen einer Position und Ausrichtung des Abutments für einen digitalen Scanvorgang, ein Zahnmodellsystem (28), mit einem Abutment (10) und einem Anzeigeelement (30), sowie ein Verfahren zum Herstellen eines Zahnersatzes.

## Beschreibung

Die vorliegende Erfindung betrifft ein Abutment zum Halten eines Kieferimplantats, ein Anzeigeelement zum Ankoppeln an das Abutment, ein Zahnmodellsystem sowie ein Verfahren zum Herstellen eines Zahnersatzes.

Abutments werden dazu verwendet, künstliche Einzelzähne sowie Gruppen von Einzelzähnen oder ganze Zahnprothesen (Zahnersatz) im Mund des Patienten zu befestigen. Hierzu werden Kieferimplantate in den Kieferknochen eingebracht (eingeschraubt), an welchen die Abutments (künstliche Zahnstümpfe) befestigt werden. Dies können mehrere Implantate bzw. Abutments für eine ganze Zahnprothese sein. Ein Abutment stellt sozusagen eine Art Zwischenstück zwischen einem Kieferimplantat und einem individuell gefertigten Zahnersatz dar und wird üblicherweise sowohl mit dem Implantat als auch mit dem Zahnersatz durch Anschrauben verbunden.

Für die Herstellung des Zahnersatzes ist es bekannt, die Mundsituation bzw. den Ober- und Unterkiefer (Gebiss) mithilfe von digitalen Scannern dreidimensional zu erfassen. Aus den daraus gewonnenen Datensätzen können mittels 3D-Druckern sogenannte Printmodelle (Zahn- bzw. Gebissmodelle) erstellt werden.

Soll ein implantatgestützter künstlicher Zahnaufbau (Zahnersatz) für einen Patienten individuell gefertigt werden, so wird für den Scanvorgang ein Anzeigeelement (auch als "ScanBody" oder "ScanMarker" bezeichnet) in ein im Kiefer des Patienten verankertes Implantat eingeschraubt. Der ScanBody ist beispielsweise als Pfosten mit einer oder mehreren Flächen ausgebildet und wird beim Scannen des Gebisses erkannt. Er gibt die genaue Position und Ausrichtung des Implantats wieder und dient damit zur späteren exakten Positionierung eines Abutments im (bzw. auf dem) Printmodell. Der Zahnersatz wird dann auf dem Abutment im Printmodell erstellt und später gemeinsam mit dem Abutment in das Implantat im Patientenkiefer geschraubt.

Je nachdem, an welcher Stelle im Gebiss ein Zahnersatz eingebracht werden soll und wie der Kieferknochen einer Person ausgebildet ist bzw. an welchen Stellen im Kiefer sich die Kieferimplantate befinden und/oder welche Winkeldifferenzen zwischen den Kieferimplantaten vorliegen, ist es notwendig abgewinkelte Abutments zu verwenden. Derartige abgewinkelte Abutments weisen einen dem Kiefer zugewandten apikalen Abschnitt auf, der gegenüber einem dem Zahnersatz zugewandten koronalen Abschnitt in einem Winkel steht. Hierdurch kann mit unterschiedlichen Kieferformen, die das Einbringen von Implantaten in verschiedene Richtungen erfordern, umgegangen werden. Bei Kieferformen und Zahnersatzpositionen, bei denen sich nur wenige Stellen zum Einbringen von Implantaten eignen, kann oft durch die Verwendung abgewinkelt ausgebildeter Abutments ein Blockieren beim Einbringen des Zahnersatzes verhindert werden.

Bei der Verwendung abgewinkelter Abutments ist es unbedingt erforderlich, die Rotations- bzw. Achsausrichtung der einzelnen Abutments in ihrem Gesamtverbund aufeinander abzustimmen, um möglichst eine gemeinsame Achsrichtung (Einschubrichtung) beim späteren Aufsetzen der Prothese zu erreichen. Die mittels des ScanBodys beim digitalen Scannen feststellbare Lage und Ausrichtung des koronalen Abschnitts eines an einem Implantat befestigten Abutments lässt jedoch keinen Rückschluss auf die Ausrichtung des apikalen Abschnitts bzw. des Implantats zu. Hierdurch wird die Modellierung des Zahnersatzes erschwert, da beim Scanvorgang normalerweise keine Daten zu dem den Kiefer umgebenden Zahnfleisch erfasst werden können. Bei der Herstellung des Zahnersatzes kann es aus diesem Grund zu Ungenauigkeiten bzw. zu einem erhöhten Aufwand für die Anpassung kommen, da manuelles Eingreifen erforderlich ist. Oft wird bei der Verwendung von abgewinkelten Abutments daher eine manuelle Modellierung gegenüber der Verwendung eines digitalen Scanvorgangs bevorzugt, was zu höherem Aufwand und geringerer Genauigkeit führen kann.

Ausgehend hiervon stellt sich das Problem, den Aufwand bei der Herstellung des Printmodells zu minimieren und die Genauigkeit bei der Herstellung von Zahnersatz zu verbessern. Bei der Verwendung abgewinkelter Abutments soll ein digitaler Scanvorgang sowie ein (automatisierter) 3D-Druck eines Printmodells ermöglicht werden.

Gelöst wird diese Aufgabe durch ein Abutment zum Halten eines Zahnersatzes an einem Kieferimplantat, mit: einem apikalen Abschnitt zum lösbaren Befestigen des Abutments an dem Kieferimplantat, der entlang einer ersten Zentralachse aufgebaut ist; einem koronalen Abschnitt zum lösbaren Befestigen des Zahnersatzes an dem Abutment, der entlang einer zweiten Zentralachse aufgebaut ist, wobei die zweite Zentralachse abgewinkelt zur ersten Zentralachse verläuft; und einem Indexierungselement in einer Mantelfläche des koronalen Abschnitts zum Vorgeben einer Ausrichtung eines an den koronalen Abschnitt für einen digitalen Scanvorgang ankoppelbaren Anzeigeelements basierend auf einer Ausrichtung der ersten Zentralachse.

Weiterhin gelöst wird die Aufgabe durch ein Anzeigeelement zum Ankoppeln an einen koronalen Abschnitt eines derartigen Abutments und Anzeigen einer Position und Ausrichtung des Abutments für einen digitalen Scanvorgang, mit einer zum Indexierungselement korrespondierenden Indexierungskopplung zum Festlegen der Ausrichtung des Anzeigeelements, wobei die Indexierungskopplung bevorzugt als mit einer Ausnehmung im Umfang des koronalen Abschnitts korrespondierender Vorsprung ausgebildet ist.

In einem weiteren Aspekt betrifft die Erfindung ein Zahnmodellsystem mit einem Abutment und einem Anzeigeelement wie oben definiert.

Zudem betrifft ein Aspekt der Erfindung ein Verfahren zum Herstellen eines Zahnersatzes, mit den Schritten: Befestigen eines Abutments wie zuvor definiert an einem Kieferimplantat; Ankoppeln eines Anzeigeelements wie zuvor definiert an das Abutment; und Durchführen eines digitalen Scanvorgangs zum Erfassen der Position und Ausrichtung der ersten Zentralachse des Abutments.

Bevorzugte Ausgestaltungen der Erfindung werden in den abhängigen Ansprüchen beschrieben. Es versteht sich, dass das Abutment, das Anzeigeelement, das Zahnmodellsystem sowie das Verfahren entsprechend der für das Abutment in den abhängigen Ansprüchen beschriebenen Ausgestaltungen ausgeführt sein können.

Erfindungsgemäß ist bei einem abgewinkelten Abutment ein Indexierungselement vorgesehen. Das Indexierungselement befindet sich in der Mantelfläche des koronalen Abschnitts. Unter einer Mantelfläche versteht sich die Außenfläche bzw. der Umfang des Körpers. Das Indexierungselement liegt in dieser Fläche. Insbesondere kann das Indexierungselement als Vorsprung oder als Ausnehmung ausgebildet sein, sodass die Mantelfläche unregelmäßig verläuft. Sozusagen kann die Mantelfläche also einen ersten Teil, der der Mantel- bzw. Außenfläche eines ursprünglichen Körpers entspricht, und einen zweiten Teil, der einer Fläche entspricht, die durch ein Wegnehmen (Ausnehmung) oder Hinzufügen (Vorsprung) von Material vom/zum ursprünglichen Körper entstanden ist, umfassen. Ebenfalls ist es möglich, dass das Indexierungselement als geometrische Form in einem Querschnitt des koronalen Abschnitts ausgebildet ist, beispielsweise als Hexagon, Oktagon oder Quadrat.

Das Indexierungselement wirkt mit einem Anzeigeelement (ScanBody) zusammen und gibt diesem Anzeigeelement die Ausrichtung des apikalen Abschnitts, also die Ausrichtung des Kieferimplantats, vor. Unter einer Ausrichtung der ersten Zentralachse versteht sich hierin insbesondere eine Winkelangabe in Bezug auf die Position und Orientierung der zweiten Zentralachse, die der Orientierung des Anzeigeelements entspricht. Die Ausrichtung umfasst bevorzugt die Angabe eines Winkels einer Projektion der ersten Zentralachse in eine Ebene, die senkrecht zur zweiten Zentralachse verläuft. Abgesehen von der Angabe eines Winkels, kann die Ausrichtung auch in anderer Weise bestimmt werden. Die Ausrichtung der ersten Zentralachse ist mittels eines solchen Winkels und ausgehend von einem bekannten Winkel zwischen den beiden Zentralachsen eindeutig festgelegt. Das Indexierungselement in der Mantelfläche des koronalen Abschnitts ist gegenüber dem apikalen Abschnitt indexiert.

Bei herkömmlichen Abutments bzw. Anzeigeelementen, bei denen der koronale Abschnitt zumeist konusförmig ausgebildet ist, ist eine Rotation des Anzeigeelements um die zweite Zentralachse möglich. Daher kann ausgehend von der Erfassung des Anzeigeelements nur die Position des Abutments sowie die Ausrichtung der zweiten Zentralachse, nicht aber die Ausrichtung der ersten Zentralachse, festgestellt werden.

Im Gegensatz dazu kann erfindungsgemäß zusätzlich zur (dreidimensionalen) Position im Mund und zur Ausrichtung der zweiten Zentralachse auch die Ausrichtung der ersten Zentralachse bzw. des Kieferimplantats festgestellt werden. Ein an das Abutment angekoppeltes Anzeigeelement wird mittels des Indexierungselements ausgerichtet. Durch das Indexierungselement wird eine eindeutige Ausrichtung des Anzeigeelements am Abutment vorgegeben, sodass ausgehend von der Ausrichtung des Anzeigeelements auch die Ausrichtung der ersten Zentralachse berechnet werden kann.

Hierzu kann das erfindungsgemäße Indexierungselement mit einer entsprechenden, korrespondierend ausgebildeten Indexierungskopplung am Anzeigeelement zusammenwirken. Indexierungselement und Indexierungskopplung geben durch Formschluss die Ausrichtung des Anzeigeelements basierend auf der Ausrichtung des apikalen Abschnitts bzw. der ersten Zentralachse vor. Ausgehend von der im Scanvorgang feststellbaren Ausrichtung des Anzeigeelements, kann die Ausrichtung der ersten Zentralachse berechnet werden.

Dies bewirkt, dass ausgehend vom Datensatz des Scanvorgangs auf die Kieferform bzw. den Verlauf und die Ausrichtung der Implantate zurückgeschlossen werden kann. Die entsprechende Anpassung eines Zahnersatzes kann vorgenommen werden. Insbesondere können entsprechende fleischfarbene Blenden in den Bereichen des Zahnersatzes vorgesehen werden, die direkt mit dem Zahnfleisch in Kontakt stehen. Es wird ermöglicht, dass das gesamte Printmodell in einem 3D-Druckvorgang erzeugt wird, ausgehend von den im digitalen Scanvorgang erfassten Daten. Zudem können Abutments jederzeit aus dem Modell oder der Mundsituation entfernt werden und präzise in genau gleicher Ausrichtung replaziert werden.

Die Erfindung erlaubt es, digital zu arbeiten. Ein digitaler Scanvorgang kann verwendet werden, um ein Printmodell automatisch zu erzeugen. Hierdurch wird der Aufwand bei der Herstellung des Printmodells bzw. des Zahnersatzes minimiert. Es kann Zahnersatz hoher Qualität hergestellt werden, da eine genaue Anpassung der Blenden an den Kiefer bzw. das Zahnfleisch eines Menschen ermöglicht wird.

Bevorzugt ist das Indexierungselement als erste Ausnehmung im Umfang des koronalen Abschnitts ausgebildet. Unter einer Ausnehmung versteht sich insbesondere eine Einbuchtung bzw. eine Delle in der Mantelfläche. Die Positionierung im Umfang bedeutet, dass ein Teilstück eines an sich rotationssymmetrischen Körpers abgenommen bzw. ausgenommen ist. Es fehlt also ein Teil der ursprünglichen Mantelfläche bzw. des Materials im koronalen Bereich. Vorteilhaft ist hierbei insbesondere, dass eine Kompatibilität zu Standard-Ankopplungsstellen an einem Zahnersatz erhalten bleibt, da gegenüber der ursprünglichen Form lediglich Material abgenommen, nicht jedoch hinzugefügt wird.

In einer weiteren vorteilhaften Ausführungsform umfasst das Abutment ein zweites Indexierungselement, das als zweite Ausnehmung im Umfang des koronalen Abschnitts ausgebildet ist. Durch das Vorhandensein von zwei Indexierungselementen, wird erreicht, dass eine hohe Positionierungssicherheit bei der Ankopplung des Anzeigeelements an dem Abutment sichergestellt ist. Die Größe üblicher Abutments liegt im Bereich einiger Millimeter. Ein koronaler Abschnitt eines herkömmlichen Abutments kann beispielsweise einen Durchmesser von ungefähr 5 mm in einer Ebene senkrecht zur zweiten Zentralachse aufweisen. Um einen Formschluss zwischen Ausnehmung und entsprechendem Vorsprung am Anzeigeelement herzustellen ist es vorteilhaft, zwei Ausnehmungen zu verwenden. Die Stabilität wird erhöht. Die Positionssicherheit bleibt gewährleistet.

In einer vorteilhaften Ausgestaltung weisen die erste Ausnehmung und die zweite Ausnehmung zum eindeutigen Vorgeben der Ausrichtung des ankoppelbaren Anzeigeelements eine unterschiedliche Größe auf, eine unterschiedliche Form auf und/oder sind bezüglich der zweiten Zentralachse in einem von 180° verschiedenen Winkel angeordnet. Um ein Verdrehen und damit eine uneindeutige Ausrichtung des Anzeigeelements zu verhindern, können die beiden Ausnehmungen unterschiedlich groß sein, unterschiedlich geformt sein oder auch in einem von 180° verschiedenen Winkel zueinander angeordnet sein. Alle Optionen erlauben, dass ein Ankoppeln des Anzeigeelements an das Abutment nur dann erfolgen kann, wenn das Anzeigeelement in der vordefinierten Position angelegt wird. Eine eindeutige Ankopplung wird erreicht. Weiter vorteilhaft umfasst der koronale Abschnitt einen sich in Richtung des apikalen Abschnitts verbreiternden kegelstumpfförmigen Bereich, in dem das Indexierungselement angeordnet ist. Als eine Art Branchenstandard im Bereich der Abutments haben sich zwischenzeitlich die so genannten Multi-Unit-Abutments durchgesetzt. Bei einer derartigen Multi-Unit findet sich im koronalen Abschnitt ein Interface zum Ankoppeln an den Zahnersatz. Vorzugsweise ist hierzu ein kegelstumpfförmiger oder auch konusförmiger Bereich, der sich in Richtung des apikalen Abschnitts verbreitert, vorgesehen. Durch einen derartigen kegelstumpfförmigen Bereich wird demnach eine Kompatibilität zwischen Abutment und Zahnersatz hergestellt. Durch die kegelstumpfförmige Ausbildung wird beim Anziehen einer Schraubverbindung eine konzentrische Anordnung des koronalen Abschnitts und der Ausbuchtung in dem Zahnersatzes erreicht. Die Positionierung des Zahnersatzes beim Befestigen durch Anschrauben erfolgt automatisch. Im kegelstumpfförmigen Bereich ist erfindungsgemäß das Indexierungselement angeordnet. Daher kann auch bei der Ankopplung des Anzeigeelements eine konzentrische Anordnung von Anzeigeelement und koronalem Abschnitt sichergestellt werden.

Weiter vorteilhaft verläuft eine Begrenzungsfläche der ersten und/oder zweiten Ausnehmung parallel zur zweiten Zentralachse. Unter einer Begrenzungsfläche ist ein Teil der Mantelfläche des Abutments im koronalen Abschnitt zu verstehen. Die Begrenzungsfläche grenzt die Ausnehmung vom koronalen Bereich des Abutments ab, bildet also die äußere Form der Ausnehmung. Ausgehend von einem ursprünglich rotationssymmetrischen koronalen Bereich, aus dem zur Herstellung des Indexierungselements ein Teil ausgenommen wird, ergibt sich die Begrenzungsfläche als diejenige Fläche bzw. derjenige Teil der Mantelfläche, der durch die Ausnehmung neu entsteht. Diese Begrenzungsfläche verläuft parallel zur zweiten Zentralachse. Beim Ankoppeln des Anzeigeelements an das Abutment kann das Anzeigeelement also aufgesteckt werden. Durch die Verwendung einer derartig ausgebildeten Begrenzungsfläche wird erreicht, dass die Ausnehmung die Stabilität des Abutments möglichst wenig beeinflusst. Es wird möglichst wenig Material im koronalen Abschnitt entfernt. Die Stabilität des Abutments insbesondere in seinem koronalen Abschnitt bleibt weitestgehend erhalten. Zudem wird eine gute Herstellbarkeit gewährleistet.

In bevorzugten Ausgestaltung umfasst die Begrenzungsfläche eine Wellenstruktur, die vorzugsweise symmetrisch bezüglich einer Symmetrieebene der ersten und/oder zweiten Ausnehmung ist. Unter einer Wellenstruktur versteht man eine regelmäßig geschwungene Struktur mit mehreren Bergen und Tälern. Hierbei bleibt die parallele Ausrichtung der Begrenzungsfläche zur zweiten Zentralachse erhalten. Die Begrenzungsfläche ist in eine Richtung gewellt, die senkrecht und im Abstand zur zweiten Zentralachse verläuft. Durch die Verwendung einer Wellenstruktur kann ein guter Formschluss zwischen Ausnehmung und entsprechendem Vorsprung am Anzeigeelement sichergestellt werden, insoweit als die Anlagefläche vergrößert wird und die Eindeutigkeit der Kopplung sichergestellt. Die Symmetrieebene der Ausnehmung verläuft parallel zur zweite Zentralachse.

In einer weiteren vorteilhaften Ausgestaltung umfasst das Abutment eine senkrecht zur zweiten Zentralachse ausgerichtete und um die zweite Zentralachse umlaufenden Anschlagsfläche zum Anlegen des Zahnersatzes. Eine derartige Anschlagsfläche dient dazu, dass der Zahnersatz sowie auch das Anzeigeelement beim digitalen Scanvorgang fest und in eindeutiger Orientierung mit dem Abutment verbindbar sind. Eine entsprechend ausgebildete Anschlagsfläche an des Zahnersatzes oder am Anzeigeelement liegt an der Anschlagsfläche des Abutments an. Eine stabile Verankerung des Zahnersatzes und auch des Anzeigeelements wird sichergestellt.

Weiter vorteilhaft umfasst das Abutment einen parallel zur Anschlagsfläche verlaufenden Absatz zwischen dem Indexierungselement und der Anschlagsfläche. Der Absatz zwischen Indexierungselement und Anschlagsfläche ist insbesondere vorteilhaft, wenn als Indexierungselement eine Ausnehmung vorgesehen ist, die zumeist in einem Fräsvorgang hergestellt wird. Ein solcher Fräsvorgang bedingt eine Toleranz beim Abfräsen. Um sicherzustellen, dass die Anschlagsfläche nicht beschädigt wird, bleibt zwischen Anschlagsfläche und Ausnehmung ein Absatz erhalten, der sozusagen einen Sicherheitspuffer für Toleranzen beim Fräsvorgang der Ausnehmung darstellt. Es wird sichergestellt, dass die Anschlagsfläche nicht beschädigt oder zerkratzt wird. Die Herstellungs- bzw. Ausschusskosten werden minimiert.

In einer weiteren Ausgestaltung umfasst das Abutment eine entlang der ersten Zentralachse durch den koronalen Abschnitt und den apikalen Abschnitt verlaufende ersten Bohrung zum Aufnehmen eines Befestigungselements zum Befestigen des Abutments am Kieferimplantat, wobei die erste Bohrung eine Mantelfläche des koronalen Abschnitts durchdringt; und ist bevorzugt ein Durchmesser der ersten Bohrung im apikalen Abschnitt kleiner als ein Durchmesser der ersten Bohrung im koronalen Abschnitt. Durch die erste Bohrung kann ein Befestigungselement, insbesondere eine Schraube, für die Befestigung des Abutments am Kieferimplantat durch das Abutment eingebracht werden. Da das Abutment abgewinkelt ist, durchdringt die Bohrung die Mantelfläche im koronalen Abschnitt. Sowohl beim Einlegen der Schraube als auch beim Festschrauben erfolgt der Zugang durch diese, die Mantelfläche durchdringende, Bohrung. Durch unterschiedliche Durchmesser im apikalen und koronalen Abschnitt, kann ein Sitz des Schraubenkopfes innerhalb des Abutments erreicht werden. Da sich die Bohrung in ihrer Dimension je nach Abutmenttyp unterscheidet, ist die Bohrung nicht als Indexierungselement verwendbar. Die Indexierungskopplung im Anzeigeelement ist immer dieselbe, da das Anzeigeelement standardisiert in der gleichen Form hergestellt werden soll. Zudem kann es aufgrund der geringen Gesamtgröße des Abutments im Millimeterbereich beim Ankoppeln des Anzeigeelements zu Ungenauigkeiten oder auch zu Beschädigungen kommen. Das Indexierungselement muss daher eine gewisse Stabilität aufweisen. Die die Mantelfläche durchdringende Bohrung bedingt Kanten im Umfang des koronalen Abschnitts, die diese Stabilität nicht bieten. Daher kann die Bohrung auch aus Stabilitätsgründen nicht als Indexierungselement verwendet werden.

In einer vorteilhaften Ausgestaltung ist ein durch die erste Bohrung unterbrochenes Segment der Mantelfläche des koronalen Abschnitts kleiner als ein durch die erste Ausnehmung unterbrochenes Segment der Mantelfläche des koronalen Abschnitts. Eine eindeutige Positionierung des Anzeigeelements wird sichergestellt. Es wird verhindert, dass die Indexierungskopplung in der ersten Bohrung aufgenommen wird, woraus sich eine Uneindeutigkeit ergeben könnte.

Vorzugsweise umfasst das Abutment eine entlang der zweiten Zentralachse durch den koronalen Abschnitt verlaufende zweiten Bohrung mit Innengewinde zum Anschrauben des Zahnersatzes. Der Zahnersatz wird normalerweise direkt in die zweite Bohrung eingeschraubt. Durch die Verwendung eines Innengewindes kann eine einfache Montage des Zahnersatzes sichergestellt werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nachfolgend anhand einiger ausgewählter Ausführungsbeispiele im Zusammenhang mit den beiliegenden Zeichnungen näher beschrieben und erläutert. Es zeigen:
- Figur 1: eine schematische perspektivische Seitenansicht eines Abutments gemäß einem Aspekt der vorliegenden Erfindung;
- Figur 2: eine schematische Darstellung eines erfindungsgemäßen Zahnmodellsystems;
- Figur 3: eine schematische perspektivische Darstellung eines Anzeigeelements gemäß einem Aspekt der vorliegenden Erfindung;
- Figur 4: ein erfindungsgemäßes Abutment in einer Ansicht senkrecht zur ersten Zentralachse;
- Figur 5a: eine Darstellung einer ersten Ausführungsform eines erfindungsgemäßen Abutments in einer Ansicht senkrecht zur zweiten Zentralachse;
- Figur 5b: eine Darstellung einer zweiten Ausführungsform eines erfindungsgemäßen Abutments in einer Ansicht senkrecht zur zweiten Zentralachse; und
- Figur 6: eine Seitenansicht eines erfindungsgemäßen Abutments.

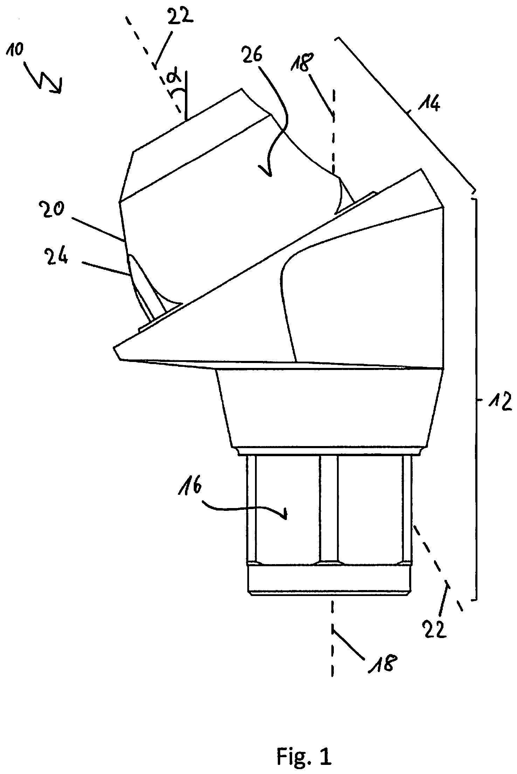

In der Figur 1 ist ein erfindungsgemäßes Abutment 10 zum Halten eines Zahnersatzes in einem Kieferimplantat dargestellt. Das Abutment 10 umfasst einen apikalen Abschnitt 12, also einen Abschnitt, der dem Kiefer zugewandt ist und der an dem Kieferimplantat befestigt wird. Das Abutment 10 umfasst weiterhin einen koronalen Abschnitt 14, also einen Abschnitt, der der Zahnkrone bzw. dem Zahnersatze zugewandt ist und an dem der Zahnersatz befestigt wird. Die beiden Abschnitte 12, 14 des Abutments 10 sind fest miteinander verbunden und bezeichnen Teile eines Körpers.

Der apikale Abschnitt 12 ist im Wesentlichen zylindrisch aufgebaut, wobei im Bereich der Kopplung an das Kieferimplantat in der dargestellten Ausführungsform mehrere ebene Außenflächen 16 vorgesehen sind, die mit einem entsprechend ausgebildeten Kieferimplantat zusammenwirken, um ein Verdrehen des Abutments 10 gegenüber dem Kieferimplantat zu verhindern. Der apikale Abschnitt 12 ist entlang einer ersten Zentralachse 18 aufgebaut. Die erste Zentralachse 18 ist in der gezeigten Darstellung eine Senkrechte.

Der koronale Abschnitt 14 umfasst einen kegelstumpfförmigen Bereich 20, der als Konus in eine entsprechend ausgeformte Ausbuchtung in dem Zahnersatz eingreift und an dem Zahnersatz befestigbar ist. Der koronale Abschnitt 14 ist entlang einer im Winkel zur ersten Zentralachse 18 stehenden zweiten Zentralachse 22 aufgebaut. Der Winkel zwischen den Zentralachsen ist so zu wählen, dass die beiden Zentralachsen 18, 22 nicht parallel zueinander verlaufen. Bevorzugt liegen beide Zentralachsen 18, 22 in einer Ebene, so dass ein Schnittpunkt der Zentralachsen vorliegt.

Es versteht sich, dass sowohl der apikale Abschnitt 12 als auch der koronale Abschnitt 14 normalerweise nicht rotationssymmetrisch zu ihren Zentralachsen aufgebaut sind. Beide Abschnitte sind dennoch im Wesentlichen zylinderförmig ausgebildet.

Die vorliegende Erfindung bezieht sich auf abgewinkelte Abutments, also Abutments, bei denen die erste Zentralachse 18 und die zweite Zentralachse 22 in einem Winkel *α* zueinander stehen. Übliche Winkel liegen hierbei beispielsweise bei 15°-45°, 20°-40°, 25°-35°, bevorzugt 30°. Es versteht sich, dass auch andere Winkel möglich und vorteilhaft sind. Durch die Winkelstellung der beiden Zentralachsen 18, 22 wird ermöglicht, dass das Abutment 10 auch bei Kieferformen verwendet werden kann, die bezüglich der Positionierung und Ausrichtung des Kieferimplantats wenig Spielraum lassen und bei denen es erforderlich ist, dass mehrere Kieferimplantate in unterschiedliche Richtungen in den Kiefer eingebracht werden. Ebenfalls werden abgewinkelte Abutments verwendet, wenn durch die Größe und Art der benötigten Zahnprothese die Position der Kieferimplantate in engen Grenzen vorgegeben ist.

Die dargestellte Ausführungsform des erfindungsgemäßen Abutments 10 ist als sogenanntes Multi-Unit-Abutment ausgebildet. Diese Multi-Unit hat sich als Quasi-Standard, der von verschiedenen Herstellern angeboten wird, durchgesetzt und zeichnet sich insbesondere durch den kegelstumpfförmigen Bereich 20 im koronalen Abschnitt 14 aus. Die entsprechend an dem Zahnersatz vorgesehenen Anschlussstellen sind zumeist als Ausnehmungen ausgebildet, die den koronalen Abschnitt des Abutments aufnehmen und in denen der koronale Abschnitt verankert wird.

Das erfindungsgemäße Abutment 10 umfasst ein Indexierungselement 24, das in einer Mantelfläche 26 des koronalen Abschnitts 14 angeordnet ist. Im dargestellten Ausführungsbeispiel ist das Indexierungselement 24 als erste Ausnehmung im Umfang des koronalen Abschnitts 14 ausgebildet. Ein Stück des Kegelstumpfs ist parallel zur zweiten Zentralachse 22 abgefräst. Dadurch, dass das Indexierungselement 24 als derartige Ausnehmung ausgebildet ist, kann der koronale Abschnitt 14 weiterhin in dieselbe Öffnung in einem Zahnersatz eingepasst werden. Lediglich entsteht an der Stelle der ersten Ausnehmung ein Hohlraum innerhalb der Öffnung in dem Zahnersatz. Eine Anpassung des Zahnersatzes bzw. des weiteren Fertigungsprozesses ist jedoch nicht erforderlich. Eine Kompatibilität bleibt gewährleistet.

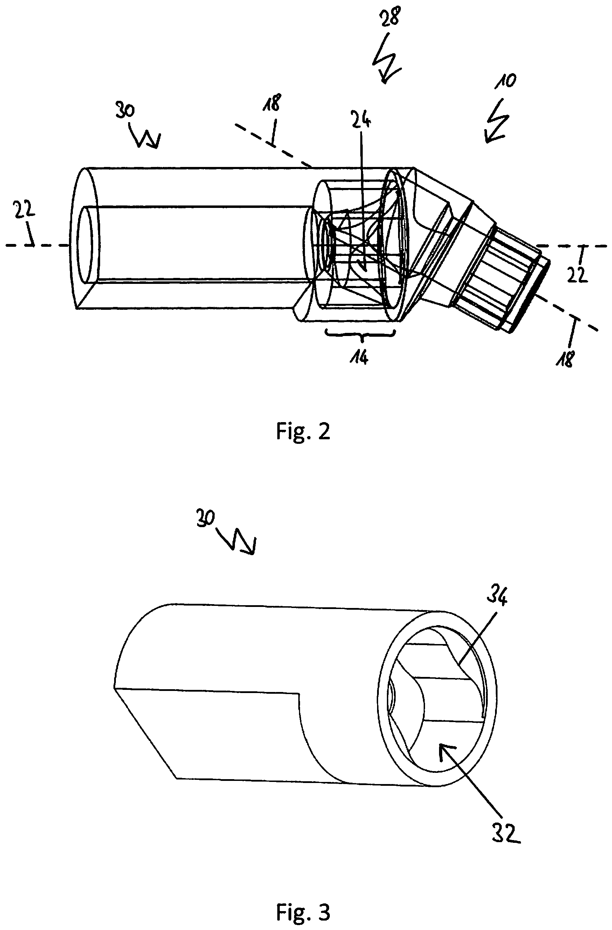

In der Figur 2 ist ein erfindungsgemäßes Zahnmodellsystem 28 dargestellt. Das Zahnmodellsystem 28 umfasst neben dem Abutment 10 noch ein Anzeigeelement 30, das in einem digitalen Scanvorgang für die Herstellung eines Printmodells an den koronalen Abschnitt 14 angekoppelt werden kann. Um den Zahnersatz anfertigen zu können, ist es zumeist erforderlich, dass eine Modellierung der Situation im Kiefer des Patienten erzeugt wird. Hierzu kann einerseits ein Abdruck genommen werden und darauf basierend manuell ein Modell hergestellt werden. Andererseits ist es heutzutage möglich und üblich, einen digitalen Scanvorgang durchzuführen, bei dem eine automatische, scannende Erfassung der Situation durchgeführt wird. Es wird ein Computermodell erzeugt, auf dessen Basis dann ein 3D-Druck generiert werden kann.

Für diesen digitalen Scanvorgang wird ein Anzeigeelement 30 (ScanBody) an das Abutment 10 angekoppelt. Das Anzeigeelement 30 wird gescannt, mittels eines entsprechenden Computerprogramms erkannt und kann dann als Grundlage für die Bestimmung der Position des Abutments sowie der Ausrichtung der zweiten Zentralachse dienen.

In bisherigen Zahnmodellsystemen war es dabei nicht möglich, ausgehend von einem Scan des Anzeigeelements 30, die Position bzw. die Ausrichtung der ersten Zentralachse 18 in Bezug auf die zweite Zentralachse 22 zu bestimmen. Die zweite Zentralachse 22 entspricht einer Zentralachse des Anzeigeelements 30. Durch die konusförmige Ausbildung der Kopplung, konnte aber das Anzeigeelement im angekoppelten Zustand um die zweite Zentralachse rotiert werden. Es war nicht möglich, ausgehend von der beim Scannen erfassbaren Ausrichtung und Position des koronalen Bereichs bzw. der zweiten Zentralachse auf die Ausrichtung der ersten Zentralachse und damit auf die Stellung des Abutments bzw. auf die Position des Kieferimplantats zurückzuschließen. Diese Rotation wird durch das Indexierungselement 24 verhindert.

Durch Verwendung des Indexierungselements 24 sind die Lage und Ausrichtung des Anzeigeelements 30 relativ zum Abutment 10 bzw. dessen zweiter Zentralachse 18, eineindeutig. Deshalb kann anhand der Position und Ausrichtung der ersten Zentralachse 18, die der Position und Achse des Anzeigeelements 30 entspricht, auf die Ausrichtung der ersten Zentralachse 18 rückgeschlossen werden. Die Ausrichtung kann dabei in Form eines Winkels in einer Ebene senkrecht zur zweiten Zentralachse 22 bestimmt werden. Die Ausrichtung kann in kartesischen oder in Polarkoordinaten und entsprechenden Bezugssystemen angegeben werden. Die Verarbeitung erfolgt bevorzugt automatisiert. Folglich kann das erfindungsgemäße Abutment 10 mit Standard-Prothesen, die über Einbuchtungen bzw. ein Sackloch zur Anbindung an Multi-Unit-Abutments verfügen, verwendet werden.

In der Figur 3 ist ein entsprechendes Anzeigeelement 30 in perspektivischer Ansicht dargestellt. Insbesondere umfasst das Anzeigeelement 30 einen Kopplungsbereich 32 in Form einer Öffnung, in die der koronale Abschnitt des Abutments 10 aufgenommen werden kann. Innerhalb dieses Kopplungsbereichs 32 ist eine Indexierungskopplung 34 angeordnet, die mit dem Indexierungselement 24 am Abutment korrespondiert. Insoweit entspricht die Indexierungskopplung 34 bevorzugt einem Vorsprung in einem Kopplungsbereich 32 eines Anzeigeelements 30.

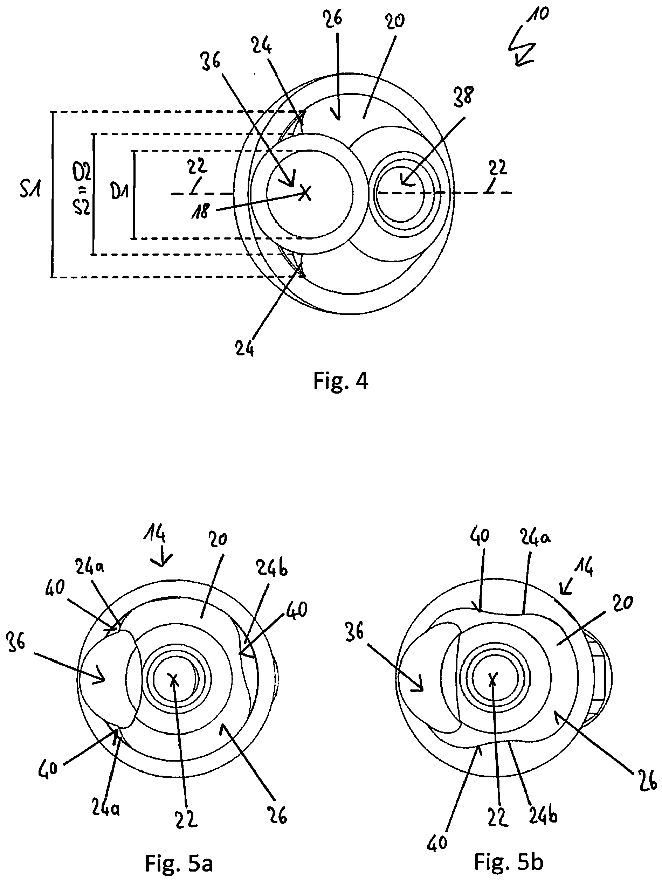

In der Figur 4 ist eine Ansicht des erfindungsgemäßen Abutments 10 in Richtung der ersten Zentralachse 18 dargestellt. Sowohl der apikale Abschnitt 12 als auch der koronale Abschnitt 14 werden von einer ersten Bohrung 36 durchquert, die entlang der ersten Zentralachse 18 verläuft und konzentrisch zu dieser angeordnet ist. Die erste Bohrung 36 dient zur Aufnahme eines Befestigungselements, durch das das Abutment 10 am Kieferimplantat befestigt werden kann. Unter einem lösbaren Befestigen wird dabei insbesondere ein Anschrauben verstanden. Allerdings sind auch andere Arten der Befestigung oder der Ankopplung denkbar.

Bevorzugt wird zum Befestigen eine Schraube verwendet. Der Kopf der Schraube wird vorzugsweise dadurch innerhalb des Abutments 10 aufgenommen, dass ein Durchmesser D1 der ersten Bohrung im apikalen Abschnitt des Abutments kleiner ist als ein Durchmesser D2 der ersten Bohrung im koronalen Abschnitt. Der Schraubenkopf liegt dann auf dem dadurch entstandenen Absatz auf und befindet sich innerhalb des Abutments 10.

Für die Befestigung des Abutments 10 am Zahnersatz ist eine zweite Bohrung 38 vorgesehen, die entlang der zweiten Zentralachse 22 verläuft. Die zweite Bohrung 38 umfasst ein Innengewinde. In das Innengewinde kann eine Schraube eingreifen, die einen Zahnersatz oder auch ein Anzeigeelement am Abutment 10 fixiert. Es versteht sich, dass auch hierbei ein anderes Befestigungsmittel verwendet werden kann.

Wie dargestellt, durchbricht die erste Bohrung 36 die Mantelfläche 26 des koronalen Abschnitts. Im gezeigten Ausführungsbeispiel des Abutments 10 ist ein als Ausnehmung ausgebildetes Indexierungselement 24 vorgesehen. Die Ausnehmung befindet sich dabei im kegelstumpfförmigen Bereich 20 im koronalen Abschnitt des Abutments 10. Ein Teilstück des Kegelstumpfs fehlt, sodass eine Begrenzungsfläche entsteht.

Das Indexierungselement 24 bzw. die Ausnehmung ist dabei so dimensioniert, dass ein unterbrochenes Segment S1 der Mantelfläche 26 durch die Ausnehmung größer ist als ein durch die erste Bohrung 36 unterbrochenes Segment S2 der Mantelfläche 26, das im dargestellten Beispiel in seiner maximalen Ausdehnung senkrecht zur ersten Zentralachse 18 dem Durchmesser D2 der ersten Bohrung 36 im koronalen Abschnitt 14 entspricht. Das Indexierungselement 24 wird sozusagen von der ersten Bohrung 36 in zwei Teile geteilt. Durch dieses Größenverhältnis wird sichergestellt, dass die Indexierungskopplung des Anzeigeelements 30 nicht bereits in die durch die erste Bohrung 36 gebildete Unterbrechung der Mantelfläche 26 des koronalen Abschnitts eingreifen kann. Es ergibt sich eine eindeutige Positionierung des Anzeigeelements 30.

In den Figuren 5a und 5b sind zwei Ausführungsformen eines erfindungsgemäßen Abutments 10 dargestellt, bei denen jeweils zwei Indexierungselemente 24 in der Mantelfläche 26 des koronalen Abschnitts angeordnet sind. Dargestellt ist in den Figuren 5a und 5b jeweils eine Draufsicht auf den koronalen Abschnitt 14 in Richtung der zweiten Zentralachse 22. Zur eindeutigen Beschreibung wird im Folgenden auf ein erstes Indexierungselement 24a und ein zweites Indexierungselement 24b Bezug genommen, wobei es sich versteht, dass diese Bezeichnungen austauschbar sind.

Durch die Verwendung von zwei Indexierungselementen wird erreicht, dass es nicht möglich ist, dass eine einzelne Indexierungskopplung versehentlich in die erste Bohrung 36 eingreift, wodurch es zu einer uneindeutigen Ankopplung des Anzeigeelements 30 kommen könnte.

Sowohl in der Figur 5a als auch in der Figur 5b sind die Indexierungselemente 24a, 24b als Ausnehmungen im Umfang des koronalen Abschnitts 14 bzw. in der Mantelfläche 26 des koronalen Abschnitts 14 ausgebildet. Derartige Ausnehmungen können durch Fräsen hergestellt werden. Die Ausnehmungen weisen eine parallel zur zweiten Zentralachse 22 verlaufende Begrenzungsfläche 40 auf. In beiden dargestellten Ausführungsformen weisen die Begrenzungsflächen 40 jeweils eine Wellenstruktur in einer Ansicht senkrecht zur zweiten Zentralachse 22, wie in den Figuren 5a und 5b dargestellt., auf. Die Wellenstruktur ist bevorzugt symmetrisch bezüglich einer Symmetrieebene, die von der zweiten Zentralachse 22 und einem Mittelpunkt der Ausnehmung aufgespannt wird.

In der Figur 5a befindet sich das erste Indexierungselement 24a im Bereich der ersten Bohrung 36. Das Indexierungselement 24a ist als Ausnehmung im Umfang des koronalen Abschnitts 14 ausgebildet, wobei die Ausnehmung in dem dargestellten Ausführungsbeispiel durch die erste Bohrung 36 unterbrochen ist, sodass das Indexierungselement 24a in zwei Teile aufgeteilt ist. Beidseitig der ersten Bohrung 36 befinden sich jeweils Teile der Ausnehmung. In einem anderen Teil der Mantelfläche 26 befindet sich das zweite Indexierungselement 24b, das ebenfalls als Ausnehmung im Umfang des koronalen Abschnitts 14 ausgebildet ist.

In der dargestellten Ausführungsform weisen die beiden Indexierungselemente 24a, 24b eine unterschiedliche Größe auf. Eine unterschiedliche Größe bedeutet hierbei, dass jeweils unterschiedlich große Teile des kegelstumpfförmigen Bereichs 20 ausgenommen bzw. abgenommen wurden. Einerseits ist es erforderlich, dass ein Indexierungselement eine ausreichend große Auflagefläche zum Anlegen an eine korrespondierende Indexierungskopplung im Anzeigeelement 30 aufweist, um sicherzustellen, dass ein Wackeln bzw. ein Beschädigen vermieden wird. Andererseits ist es erforderlich, dass die Stabilität des Abutments erhalten bleibt, sodass nur so viel Material abgenommen werden darf, dass die Stabilität nicht gefährdet wird.

Weiterhin muss eine verdrehsichere und eindeutige Anbringbarkeit des Anzeigeelements 30 gewährleistet werden. Hierzu ist in der dargestellten Ausführungsform vorgesehen, dass die beiden Indexierungselemente 24a, 24b in Bezug auf die zweite Zentralachse 22 nicht gegenüberliegend, sondern in einem von 180° verschiedenen Winkel angeordnet sind. Zudem weisen die beiden Indexierungselemente 24a, 24b eine voneinander verschiedene Größe auf.

Durch die in einem von 180° verschiedenen Winkel angeordneten unterschiedlich großen Indexierungselemente 24a, 24b wird sichergestellt, dass das Anzeigeelement 30 beim Anbringen an den koronalen Abschnitt 14 nicht verdreht werden kann. Die Anzeigefunktion bleibt eindeutig. Es versteht sich, dass es alternativ oder zusätzlich ebenfalls möglich wäre, unterschiedliche Formen zu verwenden (nicht gezeigt).

In der Figur 5b ist eine alternative Anordnung der beiden Indexierungselemente 24a, 24b dargestellt. Die Indexierungselemente 24a, 24b sind ebenfalls in einem von 180° verschiedenen Winkel im Umfang bzw. in der Mantelfläche des koronalen Abschnitts 14 angeordnet. Beide Indexierungselemente 24a, 24b weisen jedoch dieselbe Größe auf. Durch die Anordnung im von 180° verschiedenen Winkel wird ebenfalls eine verdrehsichere Kopplung an das Anzeigeelement 30 sichergestellt.

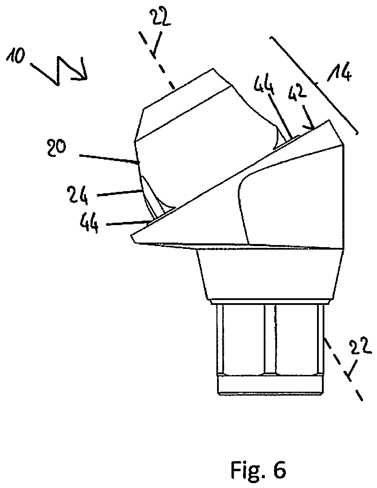

In der Figur 6 ist eine Seitenansicht des Abutments 10 dargestellt. Zur Anbindung des Abutments 10 an den Zahnersatz ist eine die zweite Zentralachse 22 umlaufende Anschlagsfläche 42 vorgesehen. Die zweite Zentralachse 22 steht senkrecht auf der Anschlagsfläche 42.

Bei der Herstellung des Indexierungselements 24 wird ein Teil des kegelstumpfförmigen Bereichs 20 des koronalen Abschnitts 14 abgefräst. Um sicherzustellen, dass bei diesem Fräsvorgang die Anschlagsfläche 42 nicht beschädigt wird, ist zwischen Indexierungselements 24 und Anschlagsfläche 42 ein parallel zur Anschlagsfläche 42 verlaufender Absatz 44 vorgesehen. Dieser Absatz 44 hat eine Höhe von einigen Mikrometern über der Anschlagsfläche 42. Der Absatz 44 stellt insoweit einen Rest des kegelstumpfförmigen Bereichs 20 im Bereich des Indexierungselements 24 dar.

Folglich kann der Zahnersatz ohne Beeinträchtigung durch den Absatz 44 an die Anschlagsfläche 42 angelegt werden. Bei der Konstruktion des Anzeigeelements und der entsprechenden Indexierungskopplung muss der Absatz 44 berücksichtigt und entsprechend ausgefräst werden. Es wird sichergestellt, dass die Anschlagsfläche 42 beim Herstellen des Indexierungselements 24 nicht beschädigt oder verkratzt wird.

Die Erfindung wurde anhand der Zeichnungen und der Beschreibung umfassend beschrieben und erklärt. Die Beschreibung und Erklärung sind als Beispiel und nicht einschränkend zu verstehen. Die Erfindung ist nicht auf die offenbarten Ausführungsformen beschränkt. Andere Ausführungsformen oder Variationen ergeben sich für den Fachmann bei der Verwendung der vorliegenden Erfindung sowie bei einer genauen Analyse der Zeichnungen, der Offenbarung und der nachfolgenden Patentansprüche.

In den Patentansprüchen schließen die Wörter "umfassen" und "mit" nicht das Vorhandensein weiterer Elemente oder Schritte aus. Der undefinierte Artikel "ein" oder "eine" schließt nicht das Vorhandensein einer Mehrzahl aus. Ein einzelnes Element oder eine einzelne Einheit kann die Funktionen mehrerer der in den Patentansprüchen genannten Einheiten ausführen. Die bloße Nennung einiger Maßnahmen in mehreren verschiedenen abhängigen Patentansprüchen ist nicht dahingehend zu verstehen, dass eine Kombination dieser Maßnahmen nicht ebenfalls vorteilhaft verwendet werden kann. Bezugszeichen in den Patentansprüchen sind nicht einschränkend zu verstehen.

## Patentansprüche

1. Abutment (10) zum Halten eines Zahnersatzes an einem Kieferimplantat, mit:
einem apikalen Abschnitt (12) zum lösbaren Befestigen des Abutments (10) an dem Kieferimplantat, der entlang einer ersten Zentralachse (18) aufgebaut ist;
einem koronalen Abschnitt (14) zum lösbaren Befestigen des Zahnersatzes an dem Abutment (10), der entlang einer zweiten Zentralachse (22) aufgebaut ist, wobei die zweite Zentralachse (22) abgewinkelt zur ersten Zentralachse (18) verläuft; und
einem Indexierungselement (24, 24a, 24b) in einer Mantelfläche (26) des koronalen Abschnitts (14) zum Vorgeben einer Ausrichtung eines an den koronalen Abschnitt (14) für einen digitalen Scanvorgang ankoppelbaren Anzeigeelements (30) basierend auf einer Ausrichtung der ersten Zentralachse (18).

2. Abutment (10) nach Anspruch 1, wobei das Indexierungselement (24, 24a, 24b) als erste Ausnehmung im Umfang des koronalen Abschnitts (14) ausgebildet ist.

3. Abutment (10) nach Anspruch 2, mit einem zweiten Indexierungselement (24, 24a, 24b), das als zweite Ausnehmung im Umfang des koronalen Abschnitts (14) ausgebildet ist.

4. Abutment (10) nach Anspruch 3, wobei die erste Ausnehmung und die zweite Ausnehmung zum eindeutigen Vorgeben der Ausrichtung des ankoppelbaren Anzeigeelements (30) eine unterschiedliche Größe aufweisen, eine unterschiedliche Form aufweisen und/oder bezüglich der zweiten Zentralachse (22) in einem von 180° verschiedenen Winkel angeordnet sind.

5. Abutment (10) nach einem der vorstehenden Ansprüche, wobei der koronale Abschnitt (14) einen sich in Richtung des apikalen Abschnitts (12) verbreiternden kegelstumpfförmigen Bereich (20) umfasst, in dem das Indexierungselement (24, 24a, 24b) angeordnet ist.

6. Abutment (10) nach einem der Ansprüche 2 bis 5, wobei eine Begrenzungsfläche (40) der ersten und/oder zweiten Ausnehmung parallel zur zweiten Zentralachse (22) verläuft.

7. Abutment (10) nach Anspruch 6, wobei die Begrenzungsfläche (40) eine Wellenstruktur umfasst, die bevorzugt symmetrisch bezüglich einer Symmetrieebene der ersten und/oder zweiten Ausnehmung ist.

8. Abutment (10) nach einem der vorstehenden Ansprüche, mit einer senkrecht zur zweiten Zentralachse (22) ausgerichtete und um die zweite Zentralachse umlaufenden Anschlagsfläche (42) zum Anlegen des Zahnersatzes.

9. Abutment (10) nach Anspruch 8, mit einem parallel zur Anschlagsfläche (42) verlaufenden Absatz (44) zwischen dem Indexierungselement (24, 24a, 24b) und der Anschlagsfläche.

10. Abutment (10) nach einem der vorstehenden Ansprüche, mit einer entlang der ersten Zentralachse (18) durch den koronalen Abschnitt (14) und den apikalen Abschnitt (12) verlaufende ersten Bohrung (36) zum Aufnehmen eines Befestigungselements zum Befestigen des Abutments am Kieferimplantat, wobei
die erste Bohrung eine Mantelfläche (26) des koronalen Abschnitts durchdringt; und
bevorzugt ein Durchmesser (D1) der ersten Bohrung im apikalen Abschnitt (12) kleiner ist als ein Durchmesser (D2) der ersten Bohrung im koronalen Abschnitt.

11. Abutment (10) nach Ansprüchen 2 und 10, wobei
ein durch die erste Bohrung (36) unterbrochenes Segment der Mantelfläche (26) des koronalen Abschnitts (14) kleiner ist als ein durch die erste Ausnehmung unterbrochenes Segment der Mantelfläche des koronalen Abschnitts.

12. Abutment (10) nach einem der vorstehenden Ansprüche, mit einer entlang der zweiten Zentralachse (22) durch den koronalen Abschnitt (14) verlaufenden zweiten Bohrung (38) mit Innengewinde zum Anschrauben des Zahnersatzes.

13. Anzeigeelement (30) zum Ankoppeln an einen koronalen Abschnitt (14) eines Abutments (10) nach einem der vorstehenden Ansprüche und Anzeigen einer Position und Ausrichtung des Abutments für einen digitalen Scanvorgang, mit:
einer zum Indexierungselement (24, 24a, 24b) korrespondierenden Indexierungskopplung (34) zum Festlegen der Ausrichtung des Anzeigeelements, wobei
die Indexierungskopplung bevorzugt als mit einer Ausnehmung im Umfang des koronalen Abschnitts korrespondierender Vorsprung ausgebildet ist.

14. Zahnmodellsystem (28), mit
einem Abutment (10) nach einem der Ansprüche 1-12; und
einem Anzeigeelement (30) nach Anspruch 13.

15. Verfahren zum Herstellen eines Zahnersatzes, mit den Schritten:
Befestigen eines Abutments (10) nach einem der Ansprüche 1-12 an einem Kieferimplantat;
Ankoppeln eines Anzeigeelements (30) nach Anspruch 13 an das Abutment; und
Durchführen eines digitalen Scanvorgangs zum Erfassen der Position und Ausrichtung des ersten Zentralachse (18) des Abutments.
